# EUROPÄISCHE PATENTSCHRIFT

(11) **EP 3 081 374 B1**
(45) Veröffentlichungstag und Bekanntmachung des Hinweises auf die Patenterteilung: **28.06.2017**
(21) Anmeldenummer: 15163558.8
(22) Anmeldetag: 14.04.2015
(51) Int. Cl.: B32B 5/02, B32B 7/12, B32B 27/08, B32B 27/12, B32B 27/32, B32B 27/36, B32B 3/26, B65D 30/08

(54) **KUNSTSTOFFGEWEBEVERBUND, VERPACKUNGSBEUTEL AUS EINEM KUNSTSTOFFGEWEBEVERBUND SOWIE VERFAHREN ZUR HERSTELLUNG EINES VERPACKUNGSBEUTELS**
COMPOSITE PLASTIC TISSUE, PACKAGING BAG MADE OF A COMPOSITE PLASTIC TISSUE AND METHOD FOR PRODUCING A PACKAGING BAG
COMPOSITE EN TISSU ET MATIÈRE PLASTIQUE, SACHET D'EMBALLAGE EN COMPOSITE EN TISSU ET MATIÈRE PLASTIQUE ET PROCÉDÉ DE FABRICATION D'UN SAC D'EMBALLAGE

(43) Veröffentlichungstag der Anmeldung: 19.10.2016
(73) Patentinhaber: Mondi AG, 1030 Wien (AT)
(72) Erfinder: Kösters, Jens, 49134 Wallenhorst (DE)
(74) Vertreter: Lorenz, Bernd Ingo Thaddeus

(56) Entgegenhaltungen:
- EP-A1- 0 540 184
- EP-A1- 1 094 013
- EP-B1- 2 117 821
- WO-A1-2014/059283
- GB-A- 2 441 320

## Beschreibung

Die Erfindung betrifft einen Kunststoffgewebeverbund für einen Kunststoffgewebeverbundbeutel mit einem Bändchengewebe, einer Außenfolie, einer zwischen der Außenfolie und dem Bändchengewebe angeordneten Zwischenschicht aus Kunststoff und einer Schwächungslinie in Form einer Stanzlinie. Gegenstand der Erfindung sind des Weiteren ein aus dem Kunststoffgewebeverbund gebildeter Verpackungsbeutel mit zwei Frontwänden sowie ein Verfahren zur Herstellung eines Verpackungsbeutels.

Kunststoffgewebeverbundbeutel sind insbesondere für Großgebinde geeignet, die ein erhebliches Füllvolumen und ein erhebliches Füllgewicht aufweisen. Durch die einzelnen, einander kreuzenden Bändchen des Bändchengewebes können sehr große Belastungen aufgenommen werden. Selbst bei einer lokalen Beschädigung des Kunststoffgewebeverbundes kann durch die einzelnen Bändchen ein Weiterreißen verhindert werden.

Besondere Vorteile ergeben sich durch den Verbund des Bändchengewebes mit der Außenfolie, wobei sich die unterschiedlichen mechanischen Eigenschaften ergänzen.

Die Außenfolie bildet des Weiteren eine glatte, hochwertige Oberfläche, die auch mit einem Konterdruck versehen sein kann. Die Außenfolie ist über die Zwischenschicht mit dem Bändchengewebe verbunden, wobei insbesondere eine Extrusionskaschierung in Betracht kommt.

Obwohl das Bändchengewebe üblicherweise aus einem heißsiegelbaren Material gebildet ist, ist eine dichte Versiegelung aufgrund der Gewebestruktur nicht oder allenfalls eingeschränkt möglich. Vor diesem Hintergrund ist es bekannt, bei der Herstellung des Kunststoffgewebeverbundbeutels die gegenüberliegenden Frontwände mit einer unterschiedlichen Länge zu bilden, um dann die überstehende Frontwand zum Verschluss des Kunststoffgewebeverbundbeutels umlegen zu können.

Bei einer von der Erfindung umfassten Ausgestaltung als Seitenfaltenbeutel ist dann die Trennlinie vorzugsweise mit mehreren Stufen, also einer Art Staffelung versehen, weshalb die beschriebene Trennlinie in der Praxis auch als Staffelschnitt bezeichnet wird.

Ein Kunststoffgewebeverbund sowie ein daraus gebildeter Verpackungsbeutel sind aus der EP 1 228 857 B1 bekannt, wobei eine Bahn des Kunststoffgewebeverbundes mit einer Perforation versehen ist und wobei eine Schwächungslinie in Form einer Perforation durch Stanzen gebildet werden kann. Zur Bildung der Perforation wird der Kunststoffgewebeverbund abschnittsweise durchgestanzt, wobei zwischen den durchgestanzten Bereichen Perforationsstege verbleiben.

In der Praxis ist die Erzeugung einer Perforation jedoch mit Problemen verbunden. Zunächst können gerade im Hinblick auf das Bändchengewebe die Perforationsstege nicht leicht durchtrennt werden. Es besteht die Gefahr, dass sich Fransen bilden oder sogar einzelne Bändchen des Bändchengewebes teilweise herausgezogen werden. Zumindest wird nach einem Abreißen entlang der Perforation eine unsaubere Risskante beobachtet.

Wenn diese Nachteile durch eine Verkleinerung der Perforationsstege reduziert werden sollen, besteht dann die Gefahr, dass der Kunststoffgewebeverbund bei seiner Verarbeitung unkontrolliert an der Perforation aufreißt. Dabei ist zu berücksichtigen, dass bei einem bevorzugten Verfahren zur Herstellung eines Verpackungsbeutels aus dem Kunststoffgewebeverbund zunächst ein Kunststoffgewebeverbundschlauch - gegebenenfalls mit eingelegten Seitenfalten - gebildet wird, von dem dann einzelne Schlauchabschnitte abgetrennt werden. Gerade bei der Bildung eines solchen Kunststoffgewebeverbundschlauches mit Faltmessern oder dergleichen kann es bei einer zu schwachen Perforation zu einem Zerreißen kommen.

Um diese Nachteile zu vermeiden, ist es aus der EP 2 117 821 B1 bekannt, eine Schwächungslinie mit einem Laser zu erzeugen, wobei durch eine geeignete Materialauswahl sowie eine geeignete Steuerung des Lasers erreicht werden kann, dass die Kunststoffgewebeverbundbahn nur teilweise durchtrennt wird. Neben einem vergleichsweise hohen apparativen Aufwand für die Bereitstellung und die Steuerung des Lasers ist auch die Materialauswahl eingeschränkt, weil die Absorptionsfähigkeit der einzelnen Lagen für die Laserstrahlung zu berücksichtigen ist. Gegebenenfalls muss auch ein zusätzliches Laseradditiv zur Erhöhung der Adsorption eingesetzt werden, wodurch sich eine weitere Erhöhung der Kosten ergibt.

Die Erzeugung von Schwächungslinien kann bei der Herstellung von Kunststoffgewebeverbundbeuteln dazu genutzt werden, eine Trennung aufeinanderfolgender Beutel zu ermöglichen.

Zusätzlich oder alternativ kann die Erzeugung zumindest einer Schwächungslinie auch zweckmäßig sein, um einen Kunststoffgewebeverbundbeutel nachträglich aufreißen zu können. Auch dabei ist zu berücksichtigen, dass gerade ein Kunststoffgewebeverbund nur sehr schwer zerrissen werden kann. In der Praxis werden Kunststoffgewebeverbundbeutel deshalb in der Regel - je nach Art ihres Verschlusses - ohne ein Zerreißen des Kunststoffgewebeverbundes an einem Ende geöffnet oder auch aufgeschnitten.

Gemäß der WO 2013/1230151 A1 sowie der WO 2014/059283 A1 wird eine Schwächungslinie an einer Frontwand eines Kunststoffgewebeverbundbeutels gebildet. Diese Schwächungslinie kann auch als Perforation gestanzt oder mittels eines Lasers erzeugt werden. Die gesamte Schwächungslinie wird an der Außenseite von einem zusätzlichen Folienzettel abgedeckt, so dass die Öffnungen einer Perforation nach außen abgedeckt sind und somit auch bei einem geschlossenen Verpackungsbeutel ein luftdichter Verschluss gewährleistet ist. Nachteilig ist bei den beschriebenen Ausführungen jedoch, dass die gesamte Schwächungslinie mit einem vergleichsweise großen Folienzettel abzudecken ist.

Vor diesem Hintergrund liegt der vorliegenden Erfindung die Aufgabe zugrunde, einen Kunststoffgewebeverbund für einen Kunststoffgewebeverbundbeutel anzugeben, der entlang einer Schwächungslinie sauber und mit gleichmäßigem Kraftaufwand getrennt werden kann, ohne dass dabei die Gefahr eines unbeabsichtigten, frühzeitigen Zerreißens besteht. Des Weiteren soll eine möglichst einfache Herstellung ohne den Einsatz eines Lasers zur Erzeugung der Schwächungslinie ermöglicht werden.

Mit der Erfindung sollen des Weiteren auch ein Verpackungsbeutel sowie ein Verfahren zur Herstellung des Verpackungsbeutels angegeben werden.

Gegenstand der Erfindung und Lösung der Aufgabe sind ein Kunststoffgewebeverbund gemäß Patentanspruch 1, ein Verpackungsbeutel gemäß Patentanspruch 7 sowie ein Verfahren zur Herstellung eines Verpackungsbeutels gemäß Patentanspruch 9.

Ausgehend von einem Kunststoffgewebeverbund mit den eingangs beschriebenen Merkmalen ist erfindungsgemäß vorgesehen, dass entlang der Stanzlinie das Bändchengewebe vollständig durchtrennt ist, die Stanzlinie in der Zwischenschicht endet und die Außenfolie an der Stanzlinie unversehrt ist.

Der vorliegenden Erfindung liegt die Erkenntnis zugrunde, dass bei einem Kunststoffgewebeverbund durch ein Stanzen eine Schwächungslinie erzeugt werden kann, welche entlang ihres Verlaufes zwar das Bändchengewebe vollständig durchtrennt, die Außenfolie jedoch unversehrt lässt. Bei einem Aufreißen des Kunststoffgewebeverbundes entlang der Stanzlinie müssen lediglich die Außenfolie, ein Teil der Zwischenschicht sowie optional vorgesehene weitere Schichten wie beispielsweise eine Haftvermittlerschicht zerrissen werden. Die Bändchen des Bändchengewebes sind bereits vollständig durchtrennt, so dass diese keinen Einfluss mehr auf das Aufreißverhalten nehmen können. Es ergibt sich ein sehr gleichmäßiges Aufreißverhalten mit einer sauberen Risskante. Im Gegensatz dazu springt der Riss bei einer Perforation von Perforationssteg zu Perforationssteg, wobei dann zum Zerreißen der einzelnen Stege ein großer Kraftaufwand notwendig ist.

Durch die gleichmäßige Ausgestaltung der Stanzlinie im Rahmen der Erfindung besteht auch bei einem Falten des Kunststoffgewebeverbundes, beispielsweise mit einem Faltmesser oder dergleichen, nicht die Gefahr eines Hängenbleibens und/oder eines unkontrollierten Aufreißens.

Die Zwischenschicht ist wesentlich, um bei dem Eindringen eines Stanzmessers in den Kunststoffgewebeverbund von der Seite des Bändchengewebes eine Art Puffer zu bilden. Dabei ist zu berücksichtigen, dass für die Durchtrennung des Bändchengewebes relativ große Kräfte notwendig sind, wobei dann aber die in Stanzrichtung dahinterliegende Außenfolie nicht zerstört werden soll. Bei einer lediglich die Stanzkräfte berücksichtigenden Verfahrensführung kann ein versehentliches Durchstanzen nicht oder allenfalls mit sehr großem Aufwand vermieden werden.

Um den Kunststoffgewebeverbund mit einer hohen Zuverlässigkeit herstellen zu können, muss das Spaltmaß einer entsprechenden Stanzvorrichtung genau vorgegeben und auch unter Krafteinwirkung eingehalten werden. Bei der Erzeugung der Stanzlinie zwischen einer Stanzwalze mit einem Stanzmesser und einer Gegenwalze ist eine möglichst feste, steife Lagerung zweckmäßig. So kann es beispielsweise von Vorteil sein, auf eine stets eine gewisse Nachgiebigkeit hervorrufende hydraulische Verstellung zu verzichten und die Stanzwalze sowie die Gegenwalze starr mit minimalem Spiel zu lagern, wobei dann eine Verstellung der Stanztiefe lediglich mechanisch und/oder durch eine Veränderung der Dicke eines das Stanzmesser aufweisenden Stanzbleches mit dem Stanzmesser erfolgen kann.

Die Außenfolie weist üblicherweise eine deutlich geringere Dicke als das Bändchengewebe auf, so dass auch deshalb bei dem Stanzen eine besondere Sorgfalt zu berücksichtigen ist, um ein Durchstanzen zu vermeiden. Die Außenschicht kann eine Schichtdicke zwischen 10 µm und 50 µm aufweisen. Besonders bevorzugt ist eine Schichtdicke zwischen 15 µm und 30 µm. Als Materialien für die Außenfolie sind insbesondere Polyethylenterephthalat (PET) und Polypropylen (PP), insbesondere biaxial orientiertes Polypropylen (BO-PP) geeignet. Bevorzugt wird die Außenfolie als Monofolie bereitgestellt, wobei grundsätzlich eine mehrschichtige Ausgestaltung nicht ausgeschlossen ist.

Die üblicherweise eine erste Oberfläche des Kunststoffgewebeverbunds bildende Außenfolie kann auch mit einem Aufdruck versehen sein, wobei dieser bevorzugt gegenüberliegend der Oberfläche als Konterdruck erzeugt wird. Der Aufdruck befindet sich dann zwischen der Außenfolie und der Zwischenschicht und ist optimal gegen Einflüsse von außen geschützt. Da die Stanzlinie erfindungsgemäß in der Zwischenschicht endet, bleibt der beschriebene Schutz auch entlang der Stanzlinie erhalten.

Die Außenfolie und das Bändchengewebe, welches üblicherweise eine zweite Oberfläche des Kunststoffgewebeverbundes bildet, können im Rahmen der Erfindung durch die Zwischenschicht extrusionskaschiert sein. Dann ergibt sich der Vorteil, dass die in einem schmelzflüssigen Zustand zwischen die Außenfolie und das Bändchengewebe eingebrachte Zwischenschicht sich auch an die Gewebestruktur des Bändchengewebes anpassen und ggf. auch in kleine Zwischenräume eindringen kann, wodurch eine besonders hohe Verbundhaftung erreicht wird. Die Zwischenschicht weist üblicherweise eine Dicke zwischen 50 µm und 55 µm, insbesondere zwischen 20 µm und 40 µm auf.

Als Material für die Zwischenschicht kommen insbesondere Polyolefine wie Polypropylen (PP), Polyethylen (PE), Mischungen von Polypropylen und Polyethylen sowie Copolymere von Polyethylen und Polypropylen in Betracht.

Optional kann zwischen der Zwischenschicht und der Außenfolie eine Haftvermittlerschicht vorgesehen sein, um auch dort eine hohe Verbundfestigkeit zu erreichen. Die Haftvermittlerschicht kann insbesondere bei der Extrusionskaschierung als weitere Schicht gemeinsam mit der Zwischenschicht aufgebracht werden. Die Dicke der Haftvermittlerschicht liegt typischerweise zwischen 1 µm und 10 µm, insbesondere zwischen 3 µm und 7 µm. Als Haftvermittler kommen insbesondere Copolymere und Terpolymere von Polyethylen in Betracht, wie beispielsweise Ethylen-Butylacrylat-Copolymer (EPA), Ethylen-Ethylacrylat-Copolymer (EEA), Ethylen-Methylacrylat-Copolymer (EMA) oder Ethylen-Methylacrylat-Acrylsäure-Terpolymer (EMAAA). Entsprechende Haftvermittler sind beispielsweise unter dem Markennamen LOTADER ® erhältlich.

Das Bändchengewebe ist aus einander kreuzende Streifen gebildet, die vorzugsweise aus einer gereckten Folie bestehen. Bevorzugt ist Polyolefin, insbesondere Polypropylen. Das Flächengewicht liegt üblicherweise zwischen 50 g/m² und 120 g/m², wobei aufgrund des verwendeten Materials und der Bändchenstruktur mit Freiräumen die Dichte in der Regel kleiner als 1 g/cm³ ist, so dass die Dicke beispielsweise zwischen 60 µm und 140 µm liegen kann. Die Breite der einzelnen Bändchen beträgt vorzugsweise zwischen 2 mm und 4 mm, bevorzugt zwischen 2,5 mm und 3,2 mm.

Gegenstand der Erfindung ist auch ein Verfahren zur Herstellung eines Verpackungsbeutels, wobei zur Bildung einer Kunststoffgewebeverbundbahn eine Bahn einer Außenfolie und eine Bahn eines Bändchengewebes zugeführt und mit schmelzflüssigem Kunststoff unter Bildung einer Zwischenschicht extrusionskaschiert werden, wobei die Kunststoffgewebeverbundbahn durch eine Stanzvorrichtung geführt wird, in der mit vorgegebenen Abständen zwischen einer Stanzwalze und einer Gegenwalze Schwächungslinien in Form von Stanzlinien derart gebildet werden, dass das Bändchengewebe vollständig durchtrennt wird und die Stanzlinie in Richtung der Dicke der Kunststoffgewebeverbundbahn in der Zwischenschicht endet und somit die Außenfolie unversehrt bleibt, und wobei aus Abschnitten der Kunststoffgewebeverbundbahn einzelne Verpackungsbeutel gebildet werden.

Die Stanzlinien können für verschiedene Zwecke vorgesehen sein. So ist es möglich, die Stanzlinien für die Bildung der einzelnen Abschnitte vorzusehen, wobei dann im Laufe des Herstellungsprozesses die Abschnitte entlang der Stanzlinien voneinander abgerissen werden können.

Im Rahmen einer solchen Ausgestaltung weist der fertige Kunststoffgewebeverbundbeutel dann die Schwächungslinie in Form einer Stanzlinie nicht mehr auf.

Zusätzlich oder alternativ kann die Stanzlinie aber auch dazu genutzt werden, um bei dem fertigen Kunststoffgewebeverbundbeutel ein leichtes Aufreißen zu ermöglichen. Die Schwächungslinie wird dann lediglich über einen Teil der Breite der Kunststoffgewebeverbundbahn erzeugt, wobei dann die Schwächungslinie bei dem Kunststoffgewebeverbundbeutel derart angeordnet wird, dass diese an einer Frontwand oder bei einem Seitenfaltenbeutel an einer Seitenfalte angeordnet ist. Im einfachsten Fall ist die Stanzlinie dann eine gerade Linie, an der ein Öffnen möglich ist, wobei lediglich die Außenfolie, ein Teil der Zwischenschicht und optional noch eine Haftvermittlerschicht durchgetrennt werden müssen.

Das eine hohe Stabilität gewährleistende Bändchengewebe ist erfindungsgemäß bereits durchtrennt. Jedoch gewährleistet die Stanzlinie als Aufreißhilfe auch noch einen dichten Verschluss, so dass insbesondere auch luftdicht verschlossene Verpackungsbeutel oder Verpackungsbeutel mit einer kontrollierten Ventilfunktion bereitgestellt werden können. Im Rahmen einer Weiterbildung kann die Stanzlinie auch rahmenförmig an einer der Frontwände verlaufen, wobei dann die Stanzlinie einen aus der entsprechenden Frontwand heraustrennbaren Abschnitt begrenzt. Insbesondere kann ein länglicher heraustrennbarer Abschnitt bereitgestellt werden, der sich an einer der Frontwände in Querrichtung erstreckt. Um eine Rissinitiierung zu ermöglichen, kann dann auf ein Ende dieses Abschnittes ein Klebezettel aufgebracht werden, der von einem Benutzer leicht gegriffen werden kann.

Ein Verpackungsbeutel mit einer Stanzlinie, die insbesondere als Aufreißhilfe vorgesehen ist, ist Gegenstand der Patentansprüche 6 bis 8.

Wenn dagegen zusätzlich oder alternativ die Stanzlinie bei der Herstellung des Verpackungsbeutels eine Trennung von einander folgenden Abschnitten ermöglichen soll, ist die Schwächungslinie zweckmäßigerweise derart gebildet, dass diese sich über die gesamte Breite der Kunststoffgewebeverbundbahn erstreckt, wobei nach der Bildung der Schwächungslinie in Form der Stanzlinie die Kunststoffgewebeverbundbahn zu einem Kunststoffgewebeschlauch mit oder ohne Seitenfalten gefaltet und umfangsseitig geschlossen wird, bevor einzelne Schlauchstücke entlang der Schwächungslinie voneinander getrennt werden.

Gemäß einer bevorzugten Weiterbildung des Verfahrens weist die Stanzlinie entlang ihres Verlaufes in Richtung der Breite Stufen auf, um - wie aus dem Stand der Technik bekannt - eine Staffelung zu bilden und dann eine der beiden Frontwände am oberen Rand und/oder am unteren Rand des zu bildenden Verpackungsbeutels überstehen zu lassen.

Bei einer Ausgestaltung als Seitenfaltenbeutel wird die Stanzlinie vorzugsweise derart gebildet, dass die Stufen sich an den Übergängen von den Seitenfalten zu den Frontwänden befinden.

Die Erfindung wird im Folgenden anhand einer lediglich ein Ausführungsbeispiel darstellenden Zeichnung erläutert. Es zeigen:
- **Fig. 1**: eine Bahn eines Kunststoffgewebeverbundes,
- **Fig. 2**: der Aufbau des Kunststoffgewebeverbundes in einer Schnittdarstellung,
- **Fig. 3**: der Kunststoffgewebeverbund gemäß der Fig. 2 mit einer Schwächungslinie in Form einer Stanzlinie,
- **Fig. 4**: ein aus einem Abschnitt der Kunststoffgewebeverbundbahn gemäß Fig. 1 gebildeter Rohling eines Verpackungsbeutels mit Seitenfalten,

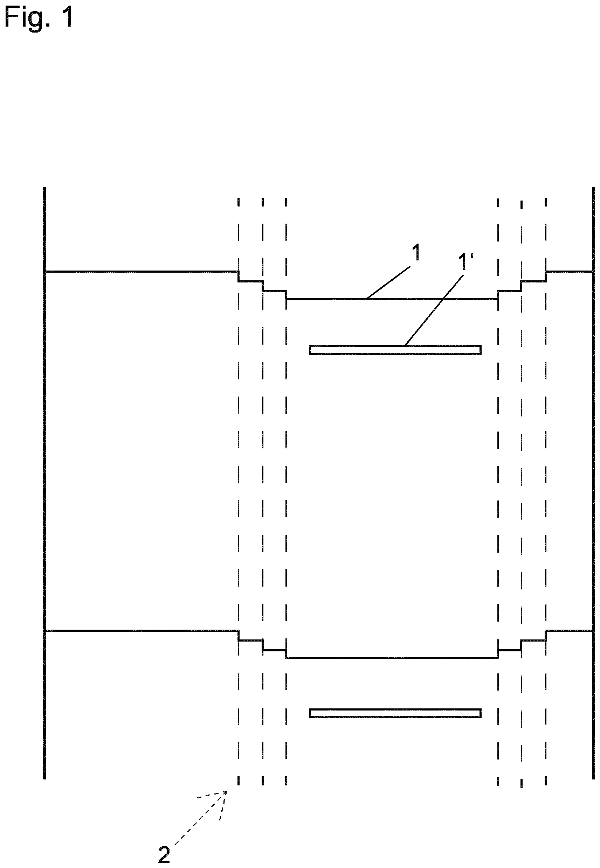

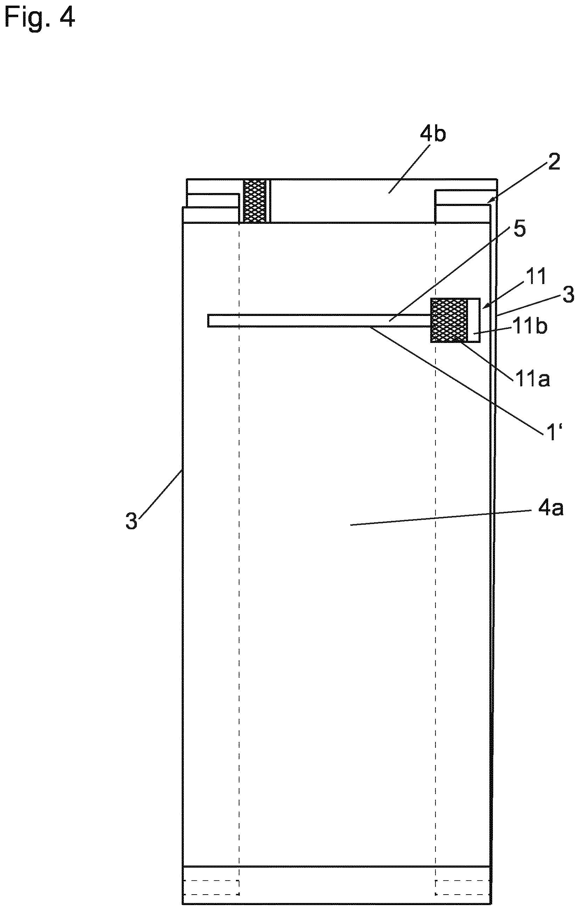

Die Fig. 1 zeigt eine Kunststoffgewebeverbundbahn, die in gleichmäßigen Abständen eine im Wesentlichen in Richtung der Breite verlaufende Schwächungslinie in Form einer Stanzlinie 1 aufweist. Aus der Kunststoffgewebeverbundbahn wird nachfolgend durch Falten ein Kunststoffgewebeverbundschlauch mit Seitenfalten 2 gebildet (vgl. Fig. 4), wobei zur Erleichterung der Zuordnung die späteren Faltkanten 3 gestrichelt dargestellt sind. Die Stanzlinie 1 weist entlang ihres Verlaufes in Richtung der Breite Stufen auf, wobei die Stufen an den Übergängen von den Seitenfalten 2 zu den gegenüberliegenden Frontwänden 4a, 4b gebildet sind.

Wie aus der Fig. 4 ersichtlich, steht eine der Frontwände 4a an einem unteren Beutelrand und die andere Frontwand 4b an einem oberen Beutelrand über. Durch die Staffelung ist es möglich, die entsprechenden Bereiche umzulegen und beispielsweise mit Klebstoff zu befestigen.

Aus der Fig. 1 ist bereits ersichtlich, dass an einer der Frontwände 4a eine weitere Stanzlinie 1' gebildet ist. Diese weitere Stanzlinie 1' umgibt bei den nachfolgend gefertigten Verpackungsbeuteln einen heraustrennbaren Abschnitt 5.

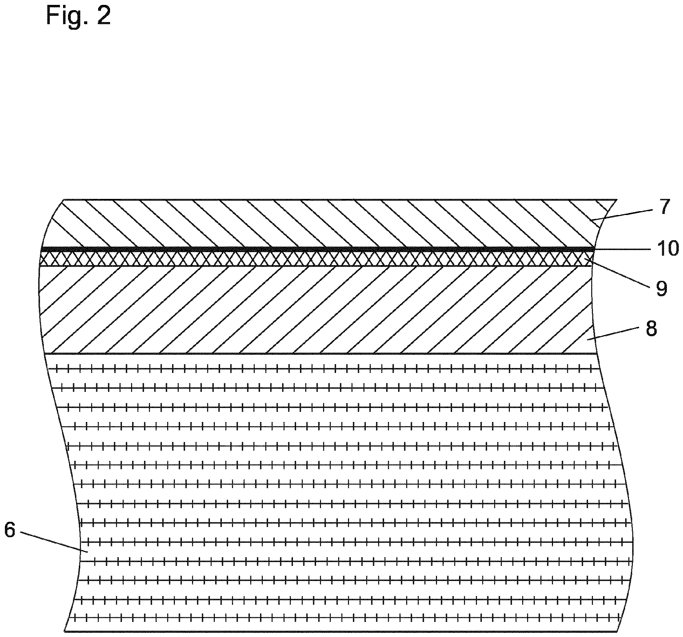

Der Schichtaufbau des Kunststoffgewebeverbundes ist in der Fig. 2 dargestellt. Der Kunststoffgewebeverbund weist ein Bändchengewebe 6, eine Außenfolie 7 und zwischen dem Bändchengewebe 6 und der Außenfolie 7 eine Zwischenschicht 8 sowie eine Haftvermittlerschicht 9 auf.

Das Bändchengewebe 6 und die Außenfolie 7 bilden gegenüberliegende Oberflächen des Kunststoffgewebeverbundes, wobei bei einem aus dem Kunststoffgewebeverbund gebildeten Verpackungsbeutel die Außenfolie 7 eine Beutelaußenseite und das Bändchengewebe 6 eine Beutelinnenseite bilden.

Es ist auch zu erkennen, dass das Bändchengewebe 6 den größten Anteil an der Dicke des Kunststoffgewebeverbundes bereitstellt. Das aus gereckten Folienstreifen auf der Basis von PP gebildete Bändchengewebe 6 weist typischerweise eine Dicke zwischen 60 µm und 140 µm auf. In dem Ausführungsbeispiel beträgt die Dicke etwa 90 µm.

Die anschließende Zwischenschicht 8 ist auf der Basis von Polyolefin gebildet, wobei es sich insbesondere um Polyethylen, Polypropylen, ein Gemisch von Polyethylen und Polypropylen oder auch ein Polyolefin-Copolymer handeln kann. Die Dicke beträgt üblicherweise zwischen 50 µm und 55 µm, in dem Ausführungsbeispiel etwa 30 µm.

Die Zwischenschicht 8 wird gemeinsam mit der Haftvermittlerschicht 9 bei einer Extrusionskaschierung zwischen das Bändchengewebe 6 und die Außenfolie 7 eingebracht, so dass sich eine besonders zuverlässige und gute Verbundhaftung ergibt. Insbesondere kann sich das zunächst schmelzflüssige Material der Zwischenschicht 8 an die Struktur des Bändchengewebes 6 anpassen und ggf. auch in einem gewissen Maße in Zwischenräume eindringen. Die Haftvermittlerschicht 9 weist in dem Ausführungsbeispiel etwa eine Dicke von etwa 5 µm auf und besteht aus einem Polyethylen-Copolymer oder Polyethylen-Terpolymer.

Als Außenfolie ist eine Monofolie aus biaxial orientiertem Polypropylen mit einer Dicke zwischen 10 µm und 50 µm vorgesehen, die an ihrer an die Haftvermittlerschicht 9 angrenzenden Seite mit einem Aufdruck 10 versehen ist. Durch diesen innenliegenden, im Konterdruck aufgebrachten Aufdruck 10 kann ein besonders hochwertiges Erscheinungsbild erreicht werden, wobei der Aufdruck 10 auch durch die Außenfolie 4 optimal geschützt ist. In dem dargestellten Ausführungsbeispiel beträgt die Dicke der Außenfolie etwa 18 µm.

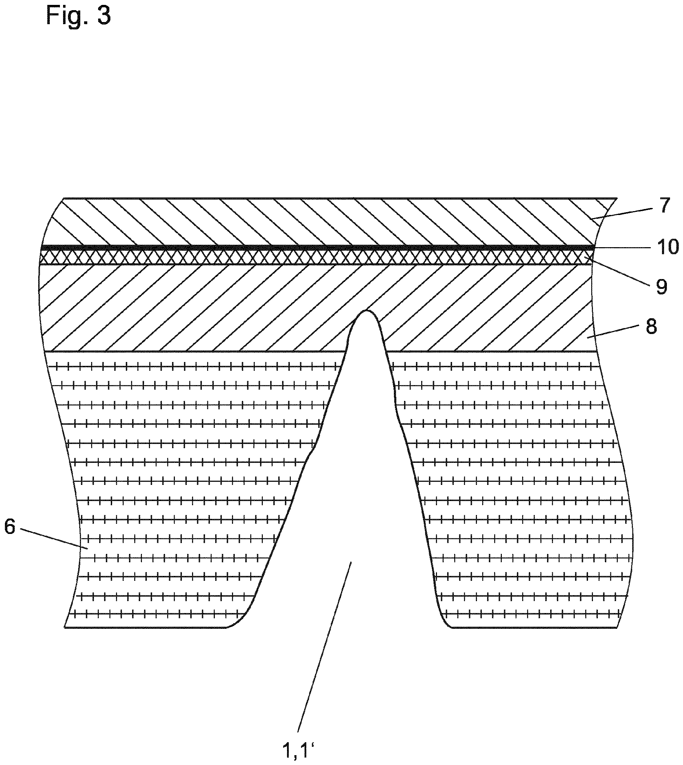

Die Fig. 3 zeigt den Kunststoffgewebeverbund an den zuvor beschriebenen Stanzlinien 1, 1'. Erfindungsgemäß ist das Bändchengewebe 6 entlang der Stanzlinien 1, 1' vollständig durchtrennt, wobei die Stanzlinien 1, 1' in der Zwischenschicht 8 enden und so die Außenfolie 7 an den Stanzlinien 1, 1' unversehrt ist.

Dadurch ergeben sich mehrere Vorteile. Zunächst bleibt der Kunststoffgewebeverbund geschlossen, was insbesondere im Hinblick auf die Erzeugung einer Aufreißhilfe mittels der Stanzlinie 1, 1' von Vorteil ist. Des Weiteren ist durch die gleichmäßige Struktur der Stanzlinie 1, 1' ein besonders gleichmäßiges Aufreißen möglich, weil entlang der Stanzlinie 1, 1' lediglich die Außenfolie 7, ein Teil der Zwischenschicht 8 und die optional vorgesehene Haftvermittlerschicht 9 zerrissen werden müssen. Die für ein Aufreißen notwendige Kraft kann genau so eingestellt werden, dass ein kontrolliertes Zerreißen mit einer sauberen Risskante möglich ist und andererseits ein versehentliches Zerreißen verhindert wird.

Die Fig. 4 zeigt schließlich exemplarisch einen Rohling eines noch nicht befüllten Verpackungsbeutels. Wie zuvor beschrieben, können die Ränder durch den gestaffelten Verlauf der Stanzlinien 1, 1a leicht umgelegt und verklebt werden. Die Seitenfalten 2 ermöglichen des Weiteren ein großes Füllvolumen des Verpackungsbeutels, wobei sich eine Blockform ergibt, die auch im Gegensatz zu einer einfachen Kissenform ohne Seitenfalten ein besseres Stapeln und Aufstellen ermöglicht.

Die an einer der Frontwände 4a angeordnete Stanzlinie 1 dient zur Bereitstellung einer Entnahmeöffnung, wobei der heraustrennbare Abschnitt 5 aus der zugeordneten Frontwand 4a herausgerissen wird. Um ein solches Herausreißen zu erleichtern, ist an einem Ende des Abschnitts 5 ein kleiner Folienzettel 11 vorgesehen, wobei ein erster Bereich 11a des Folienzettels 11 mit Klebstoff auf den Abschnitt 5 aufgeklebt ist und ein zweiter Bereich 11 b des Folienzettels 11 frei von Klebstoff ist und so leicht von einem Benutzer gegriffen werden kann.

## Patentansprüche

1. Kunststoffgewebeverbund für einen Kunststoffgewebeverbundbeutel mit einem Bändchengewebe (6), einer Außenfolie (7), einer zwischen der Außenfolie (7) und dem Bändchengewebe (6) angeordneten Zwischenschicht (8) aus Kunststoff und einer Schwächungslinie in Form einer Stanzlinie (1, 1'), **dadurch gekennzeichnet, dass** entlang der Stanzlinie (1, 1') das Bändchengewebe (6) vollständig durchtrennt ist, die Stanzlinie (1, 1') in der Zwischenschicht (8) endet und die Außenfolie (7) an der Stanzlinie (1, 1') unversehrt ist.

2. Kunststoffgewebeverbund nach Anspruch 1 **dadurch gekennzeichnet, dass** die Außenfolie (7) eine Schichtdicke zwischen 10 µm und 50 µm aufweist und aus einem Material ausgewählt aus der Gruppe Polyethylenterephthalat (PET) und Polypropylen (PP), insbesondere biaxial orientiertem Polypropylen (BO-PP) gebildet ist.

3. Kunststoffgewebeverbund nach Anspruch 1 oder 2, **dadurch gekennzeichnet, dass** die Außenfolie (7) und das Bändchengewebe (6) durch die Zwischenschicht (8) extrusionskaschiert sind, wobei die Zwischenschicht (8) eine Dicke zwischen 20 µm und 55 µm aufweist.

4. Kunststoffgewebeverbund nach einem der Ansprüche 1 bis 3, **dadurch gekennzeichnet, dass** zwischen der Zwischenschicht (8) und der Außenfolie (7) eine Haftvermittlerschicht (9) mit einer Dicke zwischen 1 µm und 10 µm angeordnet ist.

5. Kunststoffgewebeverbund nach einem der Ansprüche 1 bis 4, **dadurch gekennzeichnet, dass** das Bändchengewebe (6) aus Streifen einer gereckten Folie gebildet ist und ein Flächengewicht zwischen 50 g/m² und 120 g/m² aufweist.

6. Verpackungsbeutel aus einem Kunststoffgewebeverbund nach einem der Ansprüche 1 bis 5 mit zwei Frontwänden (4a, 4b), wobei die Außenfolie (7) eine Beutelaußenseite und das Bändchengewebe (6) eine Beutelinnenseite bilden.

7. Verpackungsbeutel nach Anspruch 6, **dadurch gekennzeichnet, dass** die Stanzlinie (1') eine Aufreißhilfe bildet.

8. Verpackungsbeutel nach Anspruch 7, **dadurch gekennzeichnet, dass** die Stanzlinie (1') rahmenförmig an einer der Frontwände (4a) verläuft und einen aus der entsprechenden Frontwand (4a) heraustrennbaren Abschnitt (5) begrenzt.

9. Verfahren zur Herstellung eines Verpackungsbeutels, wobei zur Bildung einer Kunststoffgewebeverbundbahn eine Bahn einer Außenfolie (7) und eine Bahn eines Bändchengewebes (6) zugeführt und mit schmelzflüssigem Kunststoff unter Bildung einer Zwischenschicht (8) extrusionskaschiert werden,
wobei die Kunststoffgewebeverbundbahn durch eine Stanzvorrichtung geführt wird, in der mit vorgegebenen Abständen zwischen einer Stanzwalze und einer Gegenwalze Schwächungslinien in Form von Stanzlinien (1, 1') derart gebildet werden, dass das Bändchengewebe (6) vollständig durchtrennt wird und die Stanzlinien (1, 1') in der Zwischenschicht enden und somit die Außenfolie (7) unversehrt bleibt und
wobei aus Abschnitten der Kunststoffgewebeverbundbahn einzelne Verpackungsbeutel gebildet werden.

10. Verfahren nach Anspruch 9, wobei die Schwächungslinien (1) derart gebildet werden, dass diese sich über die gesamte Breite der Kunststoffgewebeverbundbahn erstrecken, wobei nachfolgend die Kunststoffgewebeverbundbahn zu einem Kunststoffgewebeverbundschlauch gefaltet und umfangseitig geschlossen wird und wobei danach einzelne Schlauchstücke entlang der Schwächungslinie (1) voneinander getrennt werden.

11. Verfahren nach Anspruch 10, wobei die Stanzlinie (1) entlang ihres Verlaufes in Richtung der Breite Stufen aufweist.

12. Verfahren nach Anspruch 11, wobei der Kunststoffgewebeverbundschlauch derart mit Seitenfalten (2) gebildet wird, dass die Stufen sich an den Übergängen von den Seitenfalten (2) zu den Frontwänden (4a, 4b) befinden.

## Claims

1. A plastic fabric composite for a plastic fabric composite bag, comprising a strip fabric (6), an outer film (7), a plastic intermediate layer (8) disposed between the outer film (7) and the strip fabric (6), and a line of weakness in a form of a punching line (1, 1'), **characterized in that** the strip fabric (6) is completely severed along the punching line (1, 1'), the punching line (1, 1') ends in the intermediate layer (8) and the outer film (7) is undamaged on the punching line (1, 1').

2. The plastic fabric composite according to claim 1, **characterized in that** the outer film (7) has a layer thickness between 10 µm and 50 µm and is formed from a material selected from the group polyethylene terephthalate (PET), polypropylene (PP), in particular biaxially oriented polypropylene (BO-PP).

3. The plastic fabric composite according to claim 1 or 2, **characterized in that** the outer film (7) and the strip fabric (6) are extrusion-laminated through the intermediate layer (8), wherein the intermediate layer (8) has a thickness between 20 µm and 55 µm.

4. The plastic fabric composite according to any one of claims 1 to 3, **characterized in that** an adhesion-promoter layer (9) having a thickness between 1 µm and 10 µm is disposed between the intermediate layer (8) and the outer film (7).

5. The plastic fabric composite according to any one of claims 1 to 4, **characterized in that** the strip fabric (6) is formed of strips of a stretched film and has a mass per unit area between 50 g/m² and 120 g/m².

6. A packaging bag made from a plastic fabric composite according to any one of claims 1 to 5, comprising two front walls (4a, 4b), wherein the outer film (7) forms a bag outer side and the strip fabric (6) forms a bag inner side.

7. The packaging bag according to claim 6, **characterized in that** the punching line (1') forms a tear-open aid.

8. The packaging bag according to claim 7, **characterized in that** the punching line (1') extends on one of the front walls (4a) in the manner of a frame and borders a section (5) that is removable from the corresponding front wall (4a).

9. A method for manufacturing a packaging bag, wherein for forming a plastic fabric composite web a web of an outer film (7) and a web of a strip fabric (6) are supplied and extrusion-laminated with molten plastic, to form an intermediate layer (8),
wherein the plastic fabric composite web is guided through a punching device in which lines of weakness in the form of punching lines (1, 1') are formed at predefined intervals, between a punching roller and a mating roller in such a manner that the strip fabric (6) is completely severed and the punching lines (1, 1') end in the intermediate layer and thus the outer film (7) remains undamaged and
wherein individual packaging bags are formed from sections of the plastic fabric composite web.

10. The method according to claim 9, wherein the lines of weakness (1) are formed in such a manner that they extend across the entire width of the plastic fabric composite web, wherein subsequently the plastic fabric composite web is folded into a plastic fabric composite tube and is closed on a circumferential side and wherein individual tube pieces are then separated from one another along the line of weakness (1).

11. The method according to claim 10, wherein the punching line (1) has steps along its extension in the direction of the width.

12. The method according to claim 11, wherein the plastic fabric composite tube is formed in such a manner with gussets (2) that the steps are located at transitions from the gussets (2) to the front walls (4a, 4b).

## Revendications

1. Composite toile-plastique pour un sachet en composite toile-plastique comprenant une toile tissée (6), un film extérieur (7), une couche intermédiaire (8) de plastique disposée entre le film extérieur (7) et la toile tissée (6), et une ligne d'affaiblissement sous forme de ligne découpée (1, 1'), **caractérisé en ce que** la toile tissée (6) est entièrement coupée le long de la ligne découpée (1, 1'), la ligne découpée (1, 1') finit dans la couche intermédiaire (8) et le film extérieur (7) sur la ligne découpée (1, 1') reste intouché.

2. Composite toile-plastique selon la revendication 1, **caractérisé en ce que** le film extérieur (7) présente une épaisseur de couche entre 10 µm et 50 µm et est conçu dans un matériau sélectionné parmi le groupe du polyéthylène téréphtalate (PET) et des polypropylènes (PP), en particulier des polypropylènes (BO-PP) biaxialement orientés.

3. Composite toile-plastique selon la revendication 1 ou 2, **caractérisé en ce que** le film extérieur (7) et la toile tissée (6) sont pelliculés par extrusion par la couche intermédiaire (8), dans lequel la couche intermédiaire (8) présente une épaisseur entre 20 µm et 55 µm.

4. Composite toile-plastique selon l'une des revendications 1 à 3, **caractérisé en ce qu'**une couche promotrice d'adhérence (9) d'une épaisseur entre 1 µm et 10 µm est disposée entre la couche intermédiaire (8) et le film extérieur (7).

5. Composite toile-plastique selon l'une des revendications 1 à 4, **caractérisé en ce que** la toile tissée (6) est formée de bandes d'un film étiré et présente un poids surfacique entre 50 g/m² et 120 g/m².

6. Sachet d'emballage en composite toile-plastique selon l'une des revendications 1 à 5 comprenant deux parois avant (4a, 4b), dans lequel le film extérieur (7) et la toile tissée (6) forment un côté extérieur de sachet et un côté intérieur de sachet.

7. Sachet d'emballage selon la revendication 6, **caractérisé en ce que** la ligne découpée (1') forme une aide à l'arrachement.

8. Sachet d'emballage selon la revendication 7, **caractérisé en ce que** la ligne découpée (1') passe sur une des parois avant (4a) en formant un cadre et délimite un tronçon (5) pouvant être séparé de la paroi avant (4a) correspondante.

9. Procédé destiné à la fabrication d'un sachet d'emballage, dans lequel pour former un lé de composite toile-plastique, un lé d'un film extérieur (7) et un lé d'une toile tissée (6) sont amenés et pelliculés par extrusion avec du plastique en fusion en formant une couche intermédiaire (8),
dans lequel le lé de composite toile-plastique est amené par un dispositif de découpe dans lequel des lignes d'affaiblissement sous forme de lignes découpées (1, 1') sont ainsi formées à distances définies entre un rouleau de découpe et un contre-rouleau que la toile tissée (6) est entièrement coupée, et les lignes découpées (1, 1') finissent dans la couche intermédiaire et le film extérieur (7) reste ainsi intouché et
dans lequel des sachets d'emballage individuels sont formés à partir de tronçons du lé de composite toile-plastique.

10. Procédé selon la revendication 9, dans lequel les lignes d'affaiblissement (1) sont ainsi formées que celles-ci s'étendent sur toute la largeur du lé de composite toile-plastique, dans lequel ensuite, le lé de composite toile-plastique est plié en un flexible de composite toile-plastique et fermé sur tout le pourtour et dans lequel après, des morceaux de flexible individuels sont séparés les uns des autres le long de la ligne d'affaiblissement (1).

11. Procédé selon la revendication 10, dans lequel la ligne d'affaiblissement (1) présente des étages en direction de la largeur le long de son tracé.

12. Procédé selon la revendication 11, dans lequel le flexible de composite toile-plastique est ainsi formé avec des plis latéraux (2) que les étages se trouvent sur les passages des plis latéraux (2) aux parois avant (4a, 4b).
